# DEMANDE DE BREVET EUROPEEN

(11) **EP 3 324 511 A1**
(43) Date de publication de la demande: **23.05.2018**
(21) Numéro de dépôt: 17201786.5
(22) Date de dépôt: 15.11.2017
(51) Int. Cl.: H02J 7/00, H02P 7/29

(54) **CIRCUIT ÉLECTRIQUE POUR UN APPAREIL ÉLECTROPORTATIF**

(30) Priorité: 17.11.2016 FR 1661153
(71) Demandeur: SEB S.A., 69130 Ecully (FR)
(72) Inventeur: GAILHARD, Thierry, 69970 CHAPONNAY (FR)
(74) Mandataire: Soares, Luis Filipe

(57) **Abrégé**

La présente invention se rapporte à un circuit électrique (2) pour un appareil électroportatif (1) caractérisé en ce qu'il comprend un dispositif de limitation de courant (10) comprenant :
- une unité de mesure (11) de courant agencée pour mesurer ou déduire une valeur du courant traversant un moteur électrique (4), et
- une unité de calcul (13) reliée à l'unité de mesure et à un interrupteur statique de puissance (5), et agencée pour limiter la valeur du courant (I) électrique traversant le moteur électrique (4) à une valeur seuil déterminée lorsque la valeur du courant électrique traversant le moteur électrique (4) est supérieure à ladite valeur seuil déterminée (S).

## Description

La présente invention se rapporte au domaine technique général des appareils électroportatifs équipés d'un moteur.

Plus particulièrement, la présente invention se rapporte à un circuit électrique pour un appareil électroportatif.

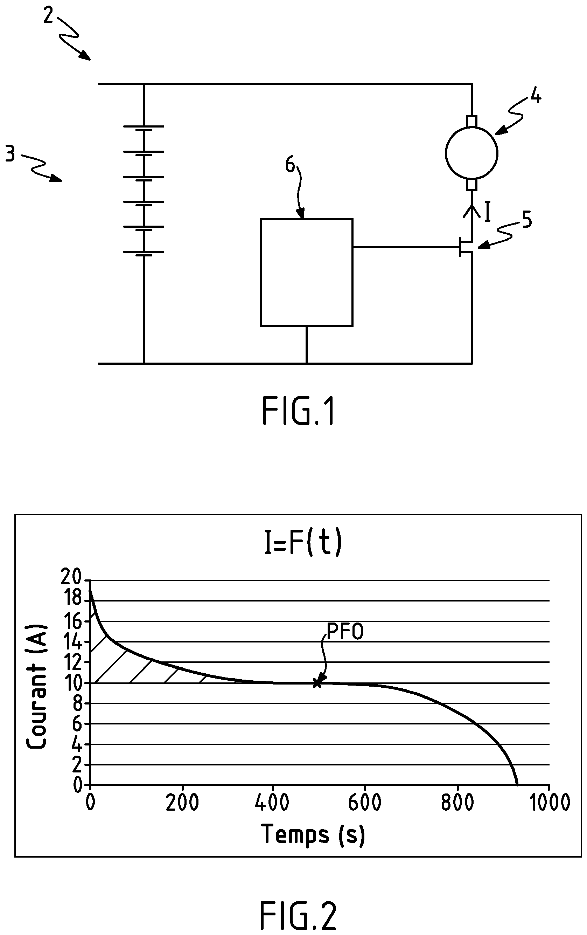

Comme illustré à la figure 1, il est connu de disposer d'un circuit électrique 2 pour un appareil électroportatif 1 comportant :
- une batterie d'accumulateur 3,
- un moteur 4,
- un interrupteur statique de puissance 5 présentant un premier état dit ouvert dans lequel le passage du courant électrique dans le moteur électrique est interdit et un deuxième état dit fermé dans lequel le passage du courant électrique dans le moteur électrique est autorisé, et
- une unité de commande 6 agencée pour contrôler les commutations entre le premier état et le deuxième état de l'interrupteur statique de puissance 5.

De manière connue, la batterie d'accumulateur délivre une tension continue générant une force électromotrice dans le circuit fermé et qui permet à un courant électrique de circuler dans le circuit électrique.

Cette force électromotrice et conséquemment le courant électrique décroissent au cours du temps lors de l'utilisation du courant électrique par le moteur électrique.

Pour fonctionner de manière optimale, le moteur électrique d'un appareil électroportatif nécessite généralement une puissance électrique minimale de fonctionnement de l'appareil électroportatif.

Compte tenu du fait que la batterie d'accumulateur délivre une faible valeur de tension de l'ordre de quelques dizaines de volts, alors cette puissance est atteinte par l'ajustement de la valeur de courant électrique.

Dès lors, l'utilisation d'un interrupteur statique de puissance est adaptée pour supporter de telles valeurs de courant électrique tout en permettant de préserver l'unité de commande des fortes valeurs de courant électrique.

L'interrupteur statique de puissance est par exemple un transistor bipolaire, un transistor à effet de champ, par exemple du type Mosfet ou Jfet, thyristor ou un autre type d'interrupteur de puissance.

Aussi, le contrôle des commutations de l'interrupteur de puissance par l'unité de commande, peut être réalisé par la modulation de la largeur de l'impulsion commandant l'interrupteur de puissance.

Cette modulation permet de faire varier la tension moyenne d'alimentation du moteur pour contrôler le fonctionnement de l'appareil électroportatif.

D'autre part, la tension et l'intensité d'une batterie diminuent au cours du temps et diminuent d'autant plus rapidement que la batterie est sollicitée pour alimenter un moteur électrique. On dit alors que la batterie se décharge.

Ainsi, la batterie va se caractériser par sa capacité à pouvoir maintenir une performance acceptable de la fonction pour laquelle l'appareil électroportatif est conçu.

Pour un aspirateur sans fil, la décharge de la batterie va se traduire par une diminution de la vitesse du moteur électrique et donc de la capacité de ramassage de poussière ce qui entraine une réduction de la performance de nettoyage de l'aspirateur.

Pour une perceuse sans fil, la décharge de la batterie va se traduire également par une diminution de la vitesse du moteur électrique et donc de la capacité de perçage, ce qui rend la perceuse sans fil inopérante.

Pour maintenir l'appareil électroportatif à un niveau de performance acceptable et limiter la dépendance du fonctionnement de l'appareil électroportatif au niveau de charge de la batterie, il est connu de dimensionner l'appareil électroportatif et de définir un point de fonctionnement optimal lors de la fabrication de l'appareil.

Ainsi, tant que la batterie présentera un état de charge supérieur à l'état de charge correspondant au point de fonctionnement optimal, alors les performances de l'appareil électroportatif demeureront relativement constantes et l'utilisateur n'aura pas la perception que la batterie se décharge.

Cependant, dans ces conditions l'appareil électroportatif se trouve dans un mode de fonctionnement menant à une surconsommation de courant électrique qui en conséquence réduit l'autonomie de la batterie.

Par ailleurs, le circuit électrique de l'appareil doit être suffisamment dimensionné pour supporter les valeurs de courant électrique supérieures à celle correspondant au point de fonctionnement optimal.

Il est connu du document WO2008/035034 A1 un dispositif de régulation de batterie agencé pour hacher la tension délivrée par la batterie d'un aspirateur sans fil en une tension en créneaux présentant une première valeur de tension maximale qui diminue au cours du temps ainsi qu'un rapport cyclique variable en fonction de cette première valeur de tension maximale.

Cette tension en créneaux est ensuite convertie en une tension continue constante présentant une deuxième valeur déterminée de tension et destinée à alimenter le moteur.

Le rapport cyclique de la tension en créneaux varie et augmente à mesure que la première valeur de la tension maximale diminue.

La deuxième valeur déterminée de tension, qui est constante, correspond à un point de fonctionnement optimal déterminé de manière à maintenir le plus longtemps possible une performance acceptable de l'aspirateur sans fil.

Cette valeur est fixe et est choisie par le fabricant.

Lorsque le rapport cyclique de la tension en créneaux atteint sa valeur maximale de 100%, alors la première valeur de tension maximale est sensiblement égale à la deuxième valeur de tension déterminée et le moteur n'est alors plus alimenté.

Ce principe revient à dimensionner le moteur pour qu'il présente une performance constante tout au long de l'utilisation de l'aspirateur quel que soit l'état de charge de la batterie.

Ainsi, la performance de l'aspirateur demeure constante tout au long de son utilisation de même que le ressenti d'utilisation par l'utilisateur. L'autonomie de la batterie est elle aussi augmentée.

Cependant, la mise en oeuvre d'un tel dispositif de régulation est complexe du fait de la nécessité des multiples mesures de tension et de la nécessité d'un convertisseur de tension.

Aussi, la présente invention a pour but de proposer une solution alternative simplifiée pour diminuer fortement le surplus de courant consommé par un moteur électrique lorsque la batterie présente un état de charge élevé et donc une tension élevée.

A cet effet, la présente invention se rapporte à un circuit électrique du type précité caractérisé en ce que le circuit électrique comprend un dispositif de limitation de courant comprenant :
- une unité de mesure de courant agencée pour mesurer ou déduire une valeur du courant traversant le moteur électrique, et
- une unité de calcul reliée à l'unité de mesure et à l'interrupteur statique de puissance, et agencée pour limiter la valeur du courant électrique traversant le moteur électrique à une valeur seuil déterminée lorsque la valeur du courant électrique traversant le moteur électrique est supérieure à ladite valeur seuil déterminée.

Cette disposition permet d'augmenter l'autonomie de la batterie d'accumulateur d'une façon moins complexe que dans l'état de la technique tout en conservant une expérience d'utilisation satisfaisante pour l'utilisateur.

Il n'est également plus nécessaire de surdimensionner le circuit électrique et le moteur électrique, ce qui permet de réduire le coût et la taille des composants mais aussi la conception mécanique de l'appareil électroportatif.

Selon un aspect de l'invention, la valeur seuil déterminée est supérieure ou égale à une valeur du courant en un point de fonctionnement optimal prédéterminé de l'appareil électroportatif.

Selon un aspect de l'invention, la valeur seuil déterminée est de 1% supérieure à la valeur du courant en un point de fonctionnement optimal prédéterminé de l'appareil électroportatif à 90% de la valeur du courant au point de fonctionnement pour une charge maximale de la batterie d'accumulateur.

Cette disposition permet de prolonger l'autonomie de la batterie d'accumulateur tout en conservant un ressenti optimisé d'utilisation.

Selon un aspect de l'invention, la valeur seuil déterminée est inférieure à une valeur du courant en un point de fonctionnement optimal prédéterminé de l'appareil électroportatif.

Cette disposition permet de définir des modes de fonctionnement à de petites vitesses prolongeant encore davantage l'autonomie de la batterie.

Selon un aspect de l'invention, la valeur seuil déterminée est de 1% à 10% inférieure à la valeur du courant en un point de fonctionnement optimal prédéterminé de l'appareil électroportatif.

Cette disposition permet de prolonger davantage l'autonomie de la batterie d'accumulateur.

Selon un aspect de l'invention, l'unité de commande comprend l'unité de calcul.

Cette disposition permet de simplifier davantage le circuit électronique.

Selon un aspect de l'invention, l'interrupteur statique de puissance est contrôlé en boucle fermée par le dispositif de limitation de courant.

Cette disposition permet de fournir à l'unité de commande un retour d'information sur le courant traversant effectivement le moteur électrique.

Selon un aspect de l'invention, le dispositif de limitation de courant comprend un dispositif de définition de la valeur seuil déterminée.

Selon un aspect de l'invention, l'unité de commande comprend le dispositif de définition de la valeur seuil déterminée.

Selon un aspect de l'invention, le contrôle de l'interrupteur statique de puissance par l'unité de commande est de type tout ou rien, ou de type proportionnel simple avec uniquement du gain, ou de type proportionnel avec un coefficient correcteur intégral, dérivé, ou intégral et dérivé.

Cette disposition permet de mettre en oeuvre plusieurs scénarios de fonctionnement.

Selon un aspect de l'invention, l'interrupteur statique de puissance est de type analogique ou de type numérique à modulation de largeur d'impulsion.

Selon un aspect de l'invention, l'unité de calcul ou le cas échéant l'unité de commande est du type analogique ou du type numérique comprenant un microcontrôleur, et dans le cas où l'interrupteur statique de puissance est du type numérique à modulation de largeur d'impulsion alors l'unité de calcul ou le cas échéant l'unité de commande est agencée pour ajuster la largeur des impulsions afin que la valeur du courant mesuré ne dépasse pas la valeur seuil déterminée.

Selon un aspect de l'invention, l'unité de mesure de courant comprend une résistance, un capteur à effet Hall ou bien une magnétorésistance.

Cette disposition est un moyen simple pour créer une unité de mesure de courant.

Selon un aspect de l'invention, la valeur seuil déterminée est variable en fonction de paramètres déterminés, tels que la température de la batterie d'accumulateur, la température du moteur électrique ou de fonctions définies par un utilisateur.

Cette disposition permet d'adapter le dispositif de limitation de courant à une situation donnée.

La présente invention se rapporte également à un appareil électroportatif comprenant un circuit électrique tel que décrit précédemment.

D'autres avantages et caractéristiques de l'invention ressortiront mieux à la lecture de la description détaillée de l'invention faite à titre illustratif et non limitatif en référence aux figures qui illustrent tout ou partie du circuit électrique d'un appareil électroportatif selon l'invention.
La figure 1 illustre un circuit électrique d'un appareil électroportatif selon l'état de la technique.
La figure 2 est un graphe illustrant l'évolution temporelle de l'intensité traversant un moteur électrique dans un circuit électrique d'un appareil électroportatif de l'état de la technique.
La figure 3 est un schéma de principe d'un circuit électrique pour un appareil électroportatif selon l'invention.
La figure 4 est une représentation schématique en boucle fermée du dispositif de limitation de courant du circuit électrique pour un appareil électroportatif selon l'invention.
La figure 5 est un graphe illustrant l'évolution temporelle de l'intensité traversant un moteur électrique dans un circuit électrique pour un appareil électroportatif selon l'invention.
La figure 6 est un graphe illustrant l'évolution temporelle de l'intensité traversant un moteur électrique dans un circuit électrique pour un appareil électroportatif selon une variante de l'invention.
La figure 7 illustre une première variante d'un circuit électrique pour un appareil électroportatif selon l'invention.
La figure 8 illustre une deuxième variante d'un circuit électrique pour un appareil électroportatif selon l'invention.
La figure 9 illustre une troisième variante d'un circuit électrique pour un appareil électroportatif selon l'invention.
La figure 10 illustre une quatrième variante d'un circuit électrique pour un appareil électroportatif selon l'invention.
La figure 11 illustre un appareil électroportatif, tel un aspirateur, selon l'invention.

Seuls les éléments nécessaires à la compréhension de l'invention ont été représentés. Pour faciliter la lecture des dessins, les mêmes éléments portent les mêmes références d'une figure à l'autre.

En plus d'une batterie d'accumulateur 3, d'un moteur électrique 4, d'un interrupteur statique de puissance 5 et d'une unité de commande 6, un circuit électrique 2 pour un appareil électroportatif 1 selon l'invention comprend un dispositif de limitation de courant 10.

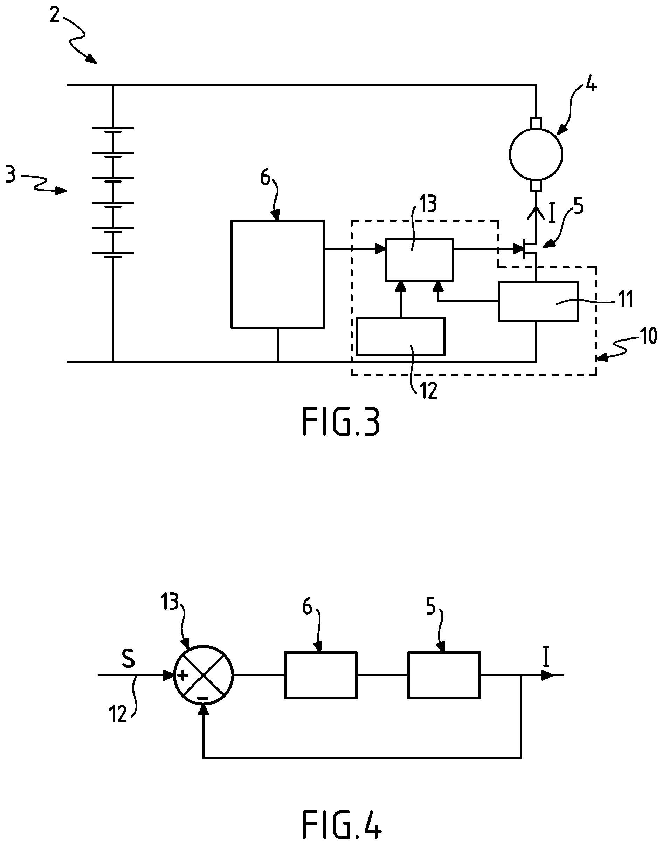

Comme illustré à la figure 3, ce dispositif de limitation de courant 10 comprend une unité de mesure 11 de courant et une unité de calcul 13.

Dans l'exemple présenté, l'unité de mesure 11 de courant est disposée entre la batterie d'accumulateur 3 et l'interrupteur statique de puissance 5.

Néanmoins, cette unité de mesure 11 de courant pourrait être disposée dans le circuit électrique 2 à un endroit quelconque permettant de mesurer ou déduire un courant traversant le moteur électrique 4.

Une telle unité de mesure 11 peut par exemple comprendre une résistance 11a présentant une valeur de résistance prédéterminée et reliée en série avec le moteur électrique 4 entre l'interrupteur statique de puissance 5 et la batterie d'accumulateur 3.

La différence de potentiel est alors mesurée aux bornes de cette résistance 11 a, ce qui permet de déterminer la valeur du courant électrique traversant la résistance 11 a et donc la valeur du courant I électrique traversant le moteur électrique 4 par la simple application de la loi d'ohm.

La valeur de cette résistance 11a est de préférence faible de manière à limiter la dissipation d'énergie par effet joule.

Alternativement, l'unité de mesure 11 peut comprendre un sous-ensemble comportant un capteur à effet Hall ou une magnétorésistance qui permettent de créer une isolation galvanique entre le circuit électrique 2 et ce sous-ensemble de l'unité de mesure 11.

L'unité de calcul 13 est quant à elle reliée à l'unité de mesure 11 et à l'interrupteur statique de puissance 5.

Dans le mode de réalisation présenté par le schéma de principe illustré à la figure 3, l'unité de calcul 13 est en outre agencée pour contrôler directement l'interrupteur statique de puissance 5.

Dans ce mode de réalisation, l'unité de calcul 13 agit donc en parallèle de l'unité de commande 6 sur l'interrupteur statique de puissance 5.

Cependant, dans un autre mode de réalisation, l'unité de calcul 13 peut également contrôler indirectement l'interrupteur statique de puissance 5 via l'unité de commande 6 en informant l'unité de commande 6 du résultat de la comparaison entre la valeur du courant I mesuré par l'unité de mesure 11 et la valeur seuil déterminée S.

Dans chacun de ces modes de réalisation, le contrôle de l'interrupteur statique de puissance 5 est réalisé de manière à limiter la valeur du courant I électrique traversant le moteur électrique 4 sur la valeur seuil déterminée S lorsque la valeur du courant I mesuré est supérieure à la valeur seuil déterminée S.

Ce contrôle de l'interrupteur statique de puissance 5 peut être de type tout ou rien, ou de type proportionnel simple avec uniquement du gain, ou de type proportionnel avec un coefficient correcteur intégral, dérivé, ou intégral et dérivé.

Cette unité de calcul 13 peut également être directement intégrée à l'unité de commande 6.

Dans un mode de réalisation, la valeur seuil déterminée S est supérieure ou égale à une valeur du courant en un point de fonctionnement optimal PFO prédéterminé de l'appareil électroportatif 1.

Comme illustré à la figure 2, ce point de fonctionnement optimal PFO prédéterminé est situé sensiblement à l'inflexion de la courbe caractérisant l'évolution du courant électrique délivré par la batterie d'accumulateur 3 en fonction du temps lors de sa décharge dans un moteur électrique 4.

Sur la figure 2, la valeur du courant en ce point de fonctionnement optimal PFO est égal à 10 A au bout d'une durée de 500 secondes.

Comme illustré à la figure 4, l'interrupteur statique de puissance 5 est contrôlé en boucle fermée par le dispositif de limitation de courant 10.

Ainsi, le dispositif de limitation de courant 10 reçoit une information sur la valeur du courant I mesuré circulant au travers le moteur électrique 4 puis limite cette valeur à une valeur supérieure ou à une valeur égale à la valeur seuil déterminée S lorsque la valeur du courant I mesuré est supérieure à ladite valeur seuil déterminée S.

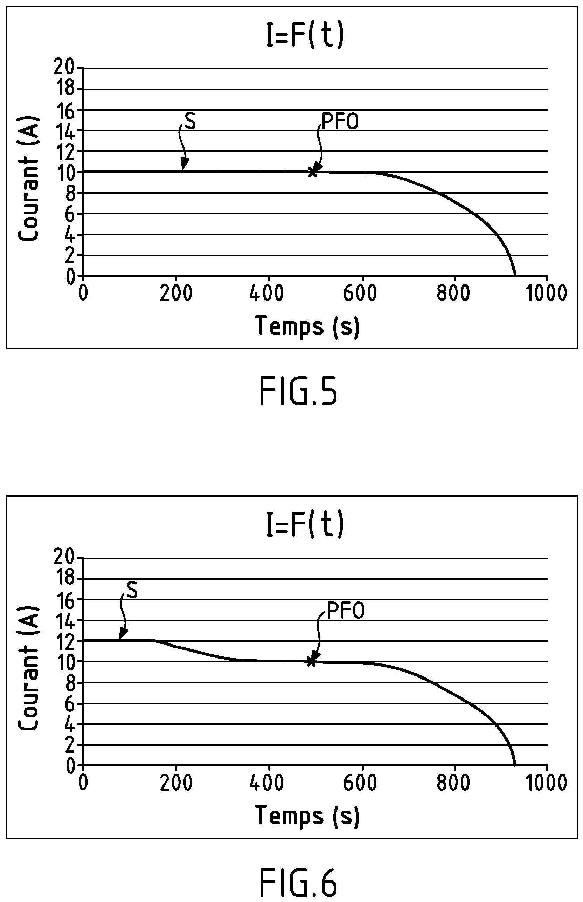

Dans l'exemple présenté à la figure 5, la valeur seuil déterminée S est égale à la valeur du courant au point de fonctionnement optimal PFO.

Ainsi, le courant I mesuré dont la valeur est supérieure à la valeur seuil déterminée S est limité sur cette valeur de courant constante.

Dans l'exemple de la figure 5, cette valeur seuil déterminée S est égale à 10 A.

Ainsi toute la composante du signal illustré à la figure 2 dont la valeur du courant est supérieure à 10 A a été supprimée et limitée à une valeur égale à 10A.

Dans un autre mode de réalisation illustré à la figure 6, la valeur seuil déterminée S est légèrement supérieure à la valeur du courant au point de fonctionnement optimal PFO.

Ainsi, le courant I mesuré dont la valeur est supérieure à la valeur seuil déterminée S est limité sur cette valeur de courant constante.

Dans l'exemple de la figure 6, cette valeur seuil déterminée S est égale à 12 A.

Ainsi toute la composante du signal illustré à la figure 2 dont la valeur du courant est supérieure à 12 A a été supprimée et limitée à une valeur égale à 12A.

En outre, selon une variante illustrée à la figure 3 le dispositif de limitation de courant 10 comprend un dispositif de définition 12 de la valeur seuil déterminée S.

Ce dispositif de définition 12 est relié à l'unité de calcul 13 et peut par exemple comprendre un régulateur de courant délivrant en sortie une valeur de courant relativement constante.

Ainsi, l'unité de calcul 13 est agencée pour comparer la valeur du courant I mesuré par l'unité de mesure 11 et la valeur seuil déterminée S définie par le dispositif de définition 12.

Dans les exemples présentés la valeur seuil déterminée S est constante.

Cependant, dans des modes de réalisation particuliers cette valeur seuil déterminée S pourrait être variable et dépendre de paramètres déterminés, tels que la température de la batterie d'accumulateur 3, la température du moteur électrique 4 ou de fonctions définies par un utilisateur.

Dans un mode de fonctionnement particulier de l'appareil électroportatif 1, par exemple un mode de fonctionnement économique il est possible d'envisager que la valeur seuil déterminée S est inférieure à la valeur du courant au point de fonctionnement optimal PFO de l'appareil électroportatif 1.

L'autonomie de la batterie d'accumulateur 3 serait ainsi encore davantage prolongée.

Un autre mode de fonctionnement particulier pourrait par exemple correspondre à un mode de fonctionnement dit « boost » dans lequel la valeur seuil déterminée S serait brièvement plus élevée que la valeur du courant au point de fonctionnement optimal PFO.

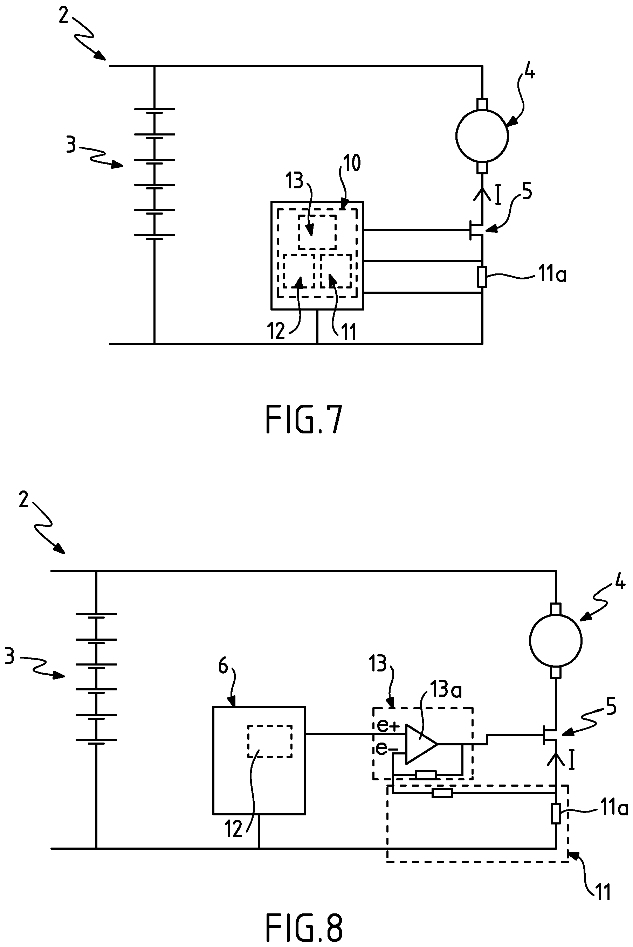

Dans une première variante du circuit électrique 2 présentée à la figure 7, l'unité de calcul 13 et le dispositif de définition de la valeur seuil déterminée S sont intégrés à l'unité de commande 6.

Dans cette variante, une partie de l'unité de mesure 11 est elle aussi intégrée à l'unité de commande 6 et seule la résistance 11a demeure à l'extérieur de l'unité de commande 6 sur le circuit électrique 2.

Dans cette variante, l'unité de commande 6 est un microcontrôleur qui réalise les trois fonctions consistant à déterminer la valeur du courant I électrique traversant le moteur électrique 4, à comparer la valeur de ce courant I électrique à une valeur seuil déterminée S et à modifier la commande de l'interrupteur statique de puissance 5, par exemple un transistor, afin de diminuer le courant envoyé au moteur électrique 4.

Dans une autre variante illustrée à la figure 8, l'interrupteur statique de puissance 5 est du type analogique et présente un fonctionnement linéaire.

De même, l'unité de calcul 13 est de type analogique et comprend par exemple un amplificateur opérationnel 13a monté en comparateur.

Dans cette variante, l'unité de mesure 11 de courant comprend une deuxième résistance 11 b reliant une borne de la première résistance 11 a et l'amplificateur opérationnel 13a de l'unité de calcul 13.

La valeur de cette deuxième résistance 11 b est prise en compte par l'unité de mesure 11 de manière à pouvoir déterminer la valeur de l'intensité du courant I circulant dans le moteur électrique 4.

Cette solution a l'avantage d'être simple à mettre en oeuvre, notamment dans le cas où le circuit électrique 2 n'intègre pas de microcontrôleur, et ne génère pas de perturbation électromagnétique car il n'y a pas de commutation dans le circuit de puissance.

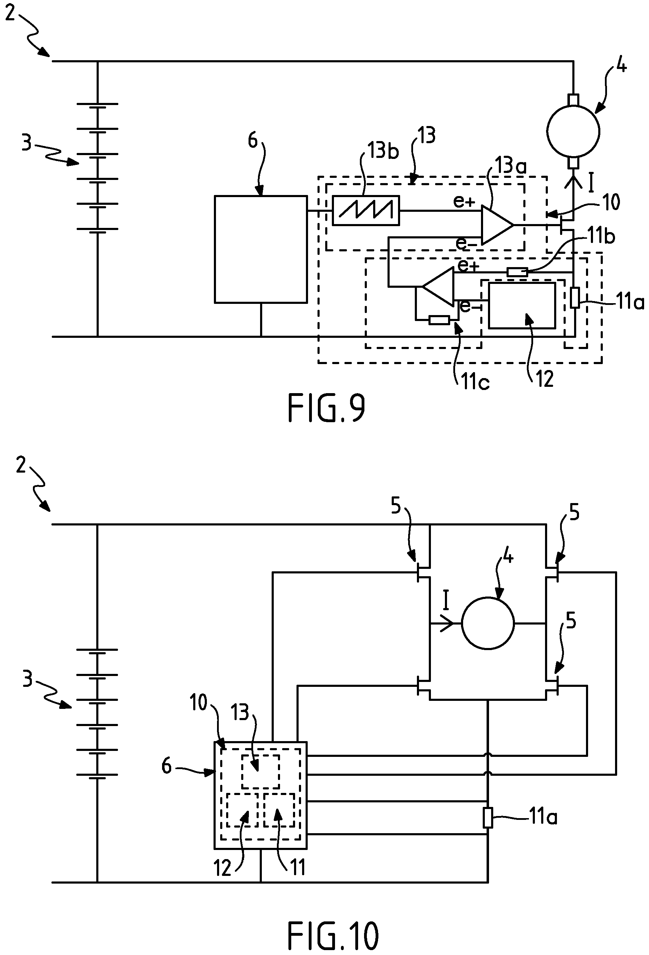

Dans une autre variante illustrée à la figure 9, l'interrupteur statique de puissance 5 est du type numérique à modulation à largeur d'impulsion.

L'unité de calcul 13 ou le cas échéant l'unité de commande 6 est quant à elle du type analogique et est agencée pour ajuster la largeur des impulsions afin que la valeur du courant I mesuré ne soit pas supérieure à la valeur seuil déterminée S.

A cet effet, l'unité de calcul 13 comprend un générateur de rampe 13b et un amplificateur opérationnel 13a monté en comparateur qui ne commande l'interrupteur statique de puissance 5 que lorsque la rampe est supérieure à un seuil déterminé.

Ce seuil déterminé est calculé d'après la différence entre la valeur du courant I mesuré par l'unité de mesure 11 et la valeur seuil déterminée S.

A cet effet, dans cette variante l'unité de mesure 11 comprend en plus de la première résistance 11a et de la deuxième résistance 11b, un amplificateur différentiel 11 c.

Une autre variante (non illustrée) dans laquelle l'unité de calcul 13 ou le cas échéant l'unité de commande 6 sont du type numérique peut également être envisagée.

Dans le circuit illustré à la figure 10, le moteur électrique peut être piloté par la pluralité d'interrupteurs statiques, qui selon le pilotage de ces interrupteurs statiques lui permet de tourner dans un sens ou dans l'autre.

Typiquement, ce circuit est un montage en pont pour piloter un moteur.

L'unité de calcul 13 et le dispositif de définition 12 d'une valeur seuil déterminée S sont physiquement intégrés à l'unité de commande 6.

L'unité de commande 6 est un microcontrôleur qui réalise les trois fonctions consistant à mesurer la valeur du courant I électrique traversant le moteur électrique 4, à comparer la valeur de ce courant I électrique à une valeur seuil déterminée S et à modifier la commande de l'interrupteur statique de puissance 5, par exemple un transistor, afin de diminuer le courant envoyé au moteur électrique 4.

Le circuit électrique 2 comprend plusieurs interrupteurs statiques de puissance 5.

Ces interrupteurs statiques de puissance 5 sont de type numérique à modulation à largeur d'impulsion, l'unité de calcul 13 étant agencée pour ajuster la largeur des impulsions afin que la valeur du courant I mesuré se limite à la valeur seuil déterminée S.

Chaque interrupteur statique de puissance 5 est connecté à une borne d'une phase du moteur électrique 4 de manière à pouvoir assurer une commutation de ces phases mettant en mouvement le rotor du moteur électrique 4.

L'exemple est donné ici pour un moteur électrique 4 biphasé mais le principe peut s'appliquer de la même façon à des moteurs monophasés ou triphasés.

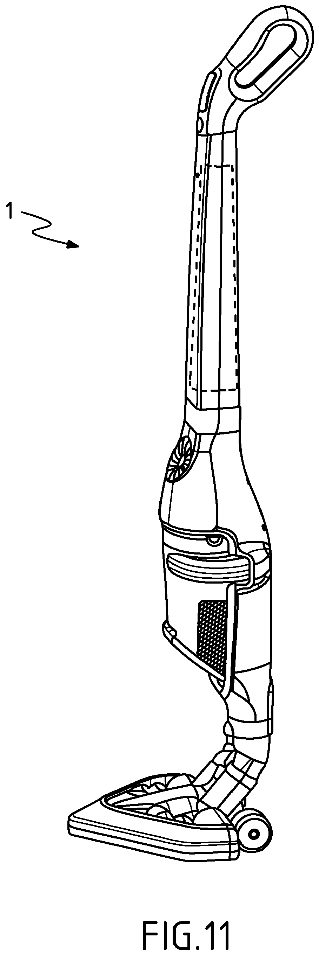

Comme illustré à la figure 11, une des applications d'un tel circuit électrique 2 concerne un appareil électroportatif 1 du type aspirateur balai.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

## Revendications

1. Circuit électrique(2) pour un appareil électroportatif (1) comportant :
- une batterie d'accumulateur (3),
- un moteur électrique (4),
- un interrupteur statique de puissance (5) présentant un premier état dit ouvert dans lequel le passage du courant électrique dans le moteur électrique (4) est interdit et un deuxième état dit fermé dans lequel le passage du courant électrique dans le moteur électrique (4) est autorisé, et
- une unité de commande (6) agencée pour contrôler les commutations entre le premier état et le deuxième état de l'interrupteur statique de puissance (5),
**caractérisé en ce que** le circuit électrique (2) comprend un dispositif de limitation de courant (10) comprenant :
- une unité de mesure (11) de courant agencée pour mesurer ou déduire une valeur du courant traversant le moteur électrique (4), et
- une unité de calcul (13) reliée à l'unité de mesure (11) et à l'interrupteur statique de puissance (5), et agencée pour limiter la valeur du courant (1) électrique traversant le moteur électrique (4) à une valeur seuil déterminée (S) lorsque la valeur du courant électrique traversant le moteur électrique (4) est supérieure à ladite valeur seuil déterminée (S).

2. Circuit électrique (2) selon la revendication 1, dans lequel la valeur seuil déterminée est supérieure ou égale à une valeur du courant en un point de fonctionnement optimal (PFO) prédéterminé de l'appareil électroportatif (1).

3. Circuit électrique (2) selon la revendication 2, dans lequel la valeur seuil déterminée est de 1% supérieure à la valeur du courant en un point de fonctionnement optimal prédéterminé de l'appareil électroportatif (1) à 90% de la valeur du courant au point de fonctionnement pour une charge maximale de la batterie d'accumulateur (3).

4. Circuit électrique (2) selon la revendication 1, dans lequel la valeur seuil déterminée est inférieure à une valeur du courant en un point de fonctionnement optimal (PFO) prédéterminé de l'appareil électroportatif (1).

5. Circuit électrique (2) selon l'une des revendications 1 à 4, dans lequel l'unité de commande (6) comprend l'unité de calcul (13).

6. Circuit électrique (2) selon l'une des revendications 1 à 5, dans lequel l'interrupteur statique de puissance (5) est contrôlé en boucle fermée par le dispositif de limitation de courant (10).

7. Circuit électrique (2) selon l'une des revendications 1 à 6 dans lequel le dispositif de limitation de courant (10) comprend un dispositif de définition (12) de la valeur seuil déterminée.

8. Circuit électrique (2) selon la revendication 7, dans lequel l'unité de commande (6) comprend le dispositif de définition (12) de la valeur seuil déterminée.

9. Circuit électrique (2) selon l'une des revendications 1 à 8, dans lequel le contrôle de l'interrupteur statique de puissance (5) par l'unité de commande (6) est de type tout ou rien, ou de type proportionnel simple avec uniquement du gain, ou de type proportionnel avec un coefficient correcteur intégral, dérivé, ou intégral et dérivé.

10. Circuit électrique (2) selon l'une des revendications 1 à 9, dans lequel l'interrupteur statique de puissance (5) est de type analogique ou de type numérique à modulation de largeur d'impulsion.

11. Circuit électrique (2) selon la revendication 1 à 10, dans lequel l'unité de calcul (13) ou le cas échéant l'unité de commande (6) est du type analogique ou du type numérique comprenant un microcontrôleur, et dans le cas où l'interrupteur statique de puissance est du type numérique à modulation de largeur d'impulsion alors l'unité de calcul (13) ou le cas échéant l'unité de commande (6) est agencée pour ajuster la largeur des impulsions afin que la valeur du courant (1) mesuré ne dépasse pas la valeur seuil déterminée (S).

12. Circuit électrique (2) selon l'une des revendications 1 à 11, dans lequel l'unité de mesure de courant comprend une résistance, un capteur à effet Hall ou bien une magnétorésistance.

13. Circuit électrique (2) selon l'une des revendications 1 à 12, dans lequel la valeur seuil déterminée (S) est variable en fonction de paramètres déterminés, tels que la température de la batterie d'accumulateur (3), la température du moteur électrique (4) ou de fonctions définies par un utilisateur.

14. Appareil électroportatif (1) comprenant un circuit électrique (2) selon l'une des revendications 1 à 13.
